# EUROPÄISCHE PATENTSCHRIFT

(11) **EP 1 724 779 B1**
(45) Veröffentlichungstag und Bekanntmachung des Hinweises auf die Patenterteilung: **20.02.2019**
(21) Anmeldenummer: 06112275.0
(22) Anmeldetag: 06.04.2006
(51) Int. Cl.: G11B 27/32, G11B 27/34, G11B 27/10

(54) **Vorrichtung zum Anzeigen eines Datenträger-Inhaltsverzeichnisses**
Device for displaying a volume table of contents of a data carrier
Dispositif destiné à l'affichage d'un sommaire d'un support de données

(30) Priorität: 18.05.2005 DE 102005022871
(43) Veröffentlichungstag der Anmeldung: 22.11.2006
(73) Patentinhaber: Continental Automotive GmbH, 30165 Hannover (DE)
(72) Erfinder: Weymann, Bernd, 35619 Braunfels (DE)

(56) Entgegenhaltungen:
- EP-A- 0 947 921
- EP-A- 1 262 984
- EP-A- 1 679 704
- US-A- 5 410 525
- US-B1- 6 356 971

## Beschreibung

Die Erfindung betrifft eine Vorrichtung zum Anzeigen eines Datenträger-Inhaltsverzeichnisses eines Datenträgers, die eine Anzeigeeinheit umfasst, die ausgebildet ist, bezogen auf eine vorgebbare aktuelle Position in dem Datenträger-Inhaltsverzeichnis Dateneinträge des Datenträger-Inhaltsverzeichnisses in Form mindestens einer Liste anzuzeigen.

Datenträger, wie z.B. Compact Disks, Digital Versatile Disks oder Festplatten, sind zunehmend mit größeren Speicherkapazitäten verfügbar. Dadurch sind auf dem Datenträger eine große Anzahl von Verzeichnissen oder Dateien speicherbar. Um eine gewünschte Datei auffinden zu können, muss ein Datenträger-Inhaltsverzeichnis von dem Datenträger geladen werden. Das Datenträger-Inhaltsverzeichnis eines solchen Datenträgers kann viel Speicher erfordern. Vorrichtungen, die auf einen solchen Datenträger zugreifen, verfügen jedoch gegebenenfalls nicht über ausreichend viel Speicher, um das Datenträger-Inhaltsverzeichnis ohne Einschränkungen laden und darin navigieren zu können. Deshalb sind Einschränkungen vorgesehen, die z.B. die Tiefe von Verzeichnisstrukturen auf dem Datenträger oder die Länge von Dateinamen oder Verzeichnisnamen beschränken. Gegebenenfalls werden Dateinamen oder Verzeichnisnamen durch Nummern ersetzt, um den Speicherbedarf des Datenträger-Inhaltsverzeichnisses zu verringern. Das Navigieren in umfangreichen Datenträger-Inhaltsverzeichnissen ist so erschwert.

In der EP 1 262 984 A2 ist eine Datenspeichervorrichtung mit einer Dateilistenanzeigefunktion offenbart. Die Datenspeichervorrichtung umfasst eine Leseeinheit zum Lesen einer vollständigen Liste von Dateien, die auf einem Speichermedium gespeichert sind. Diese vollständige Dateiliste wird von dem Speichermedium gelesen und in einer Speichereinheit der Datenspeichervorrichtung gespeichert. Aufeinander folgende Dateien in der vollständigen Dateiliste werden durch eine Steuereinheit der Datenspeichervorrichtung in Teillisten zu beispielsweise zehn Dateien zusammengefasst. Auf einer Anzeigeeinheit der Datenspeichervorrichtung wird jeweils eine der Teillisten angezeigt. Abhängig von einer Benutzereingabe erfolgt ein Vorwärts- oder Rückwärtsblättern zur nächsten oder vorhergehenden Teilliste, die dann angezeigt wird.

In der EP 1 679 704 A1 sind ein Verfahren und eine Vorrichtung zum Erfassen eines Inhalts eines Speichermediums offenbart. Von dem Speichermedium werden Informationen über die Struktur und/oder den Typ von Dateneinträgen gelesen. Ein verfügbarer Speicherplatz für einen oder mehrere Zwischenspeicher wird ermittelt. Eine Menge von Informationen oder eine Anzahl von Dateneinträgen, die von dem Speichermedium gelesen werden, ist vorgegeben durch den Speicherplatz des Zwischenspeichers oder der Zwischenspeicher. Werden abhängig von einer Benutzereingabe Dateneinträge angefordert, die nicht bereits in einem der Zwischenspeicher gespeichert sind, dann werden diese von dem Speichermedium nachgeladen und in einem der Zwischenspeicher gespeichert. Eine Anzeige von Dateneinträgen zeigt den Inhalt von einem der Zwischenspeicher.

EP 0 947 921 A2 offenbart ein Verfahren und eine Vorrichtung zur Steuerung der Darstellung von hierarchischer Information. Die hierarchische Information wird in einem Browser, der vertikal orientiert ist, angezeigt, wobei der Browser eine Pfadliste und eine Auswahlliste aufweist. Die Auswahlliste zeigt selektierte Auswahlelemente in einer bestimmten Hierarchieebene. Die Pfadliste zeigt eine Vielzahl von Auswahlelementen, die einen Traversierungspfad repräsentieren durch die hierarchische Information. Die Pfadliste wird aktualisiert, um die selektierten Einträge und jeden darauffolgenden Eintrag zu entfernen. Die Pfadliste und die Auswahlliste können unabhängig von einander in der Größe angepasst werden und werden automatisch gepflegt, um nicht-relevante Informationen zu entfernen. Mit der Bedienung eines Rollbalkens werden aktuell angezeigte Dateneinträge durch weitere Dateneinträge ersetzt.

Die Aufgabe der Erfindung ist, eine Vorrichtung zum Anzeigen eines Datenträger-Inhaltsverzeichnisses eines Datenträgers zu schaffen, die das Navigieren in dem Datenträger Inhaltsverzeichnis übersichtlich und einfach macht.

Die Aufgabe wird gelöst durch die Merkmale der unabhängigen Patentansprüche. Vorteilhafte Weiterbildungen der Erfindung sind in den Unteransprüchen gekennzeichnet.

Die Erfindung zeichnet sich aus durch eine Vorrichtung zum Anzeigen eines Datenträger-Inhaltsverzeichnisses eines Datenträgers. Die Vorrichtung umfasst eine Anzeigeeinheit und einen Speicher. Die Anzeigeeinheit ist ausgebildet, bezogen auf eine vorgebbare aktuelle Position in dem Datenträger-Inhaltsverzeichnis eine vorgegebene erste maximale Anzahl von aufeinander folgenden Dateneinträgen des Datenträger-Inhaltsverzeichnisses in Form mindestens einer ersten Liste anzuzeigen. Der Speicher ist ausgebildet, mindestens zwei zweite Listen mit einer vorgegebenen zweiten maximalen Anzahl von Dateneinträgen zu speichern. Die vorgegebene zweite maximale Anzahl von Dateneinträgen ist mindestens so groß wie die vorgegebene erste maximale Anzahl von Dateneinträgen. Die mindestens eine erste Liste ist Teil einer der mindestens zwei zweiten Listen. Die Vorrichtung ist ausgebildet, abhängig von einer Benutzeranforderung die vorgebbare aktuelle Position in dem Datenträger-Inhaltsverzeichnis vorzugeben. Die Vorrichtung ist weiter ausgebildet, abhängig von der vorgebbaren aktuellen Position mindestens einen weiteren Dateneintrag des Datenträger-Inhaltsverzeichnisses von dem Datenträger zu lesen und in einer der mindestens zwei zweiten Listen zu speichern, wenn dieser weitere Dateneintrag aktuell nicht in den mindestens zwei zweiten Listen gespeichert ist. Die Vorrichtung ist ferner ausgebildet, abhängig von der vorgebbaren aktuellen Position mindestens einen Dateneintrag, der in den mindestens zwei zweiten Listen gespeichert ist, zu ersetzen durch den mindestens einen weiteren Dateneintrag, wenn in den mindestens zwei zweiten Listen bereits die vorgegebene zweite maximale Anzahl von Dateneinträgen gespeichert ist. Die Vorrichtung ist ferner ausgebildet zum Zuordnen des mindestens einen weiteren Dateneintrags zu einer der mindestens zwei zweiten Listen abhängig von einer Dateneintragsart.

Der Vorteil ist, dass ein maximaler Speicherbedarf in dem Speicher für die mindestens eine zweite Liste durch die vorgegebene zweite maximale Anzahl von Dateneinträgen vorgegeben ist. Der maximale Speicherbedarf ist ferner unabhängig von einer Speicherkapazität des Datenträgers oder von einer Anzahl von Dateneinträgen in dem Datenträger-Inhaltsverzeichnis. Dateneinträge des Datenträger-Inhaltsverzeichnisses repräsentieren beispielsweise ein Verzeichnis, einen Verzeichnispfad oder eine Datei.

Die Vorrichtung ist beispielsweise eine Musik-, Video- oder Bildwiedergabe-Vorrichtung, der Datenträger mit einer großen Speicherkapazität zuführbar sind, z.B. CDs, DVDs, Flash-Speichermedien oder Festplatten. Das Anzeigen und das Navigieren in umfangreichen Datenträger-Inhaltsverzeichnissen solcher Datenträger ist zuverlässig möglich.

Ist die vorgegebene zweite maximale Anzahl von Dateneinträgen größer als die vorgegebene erste maximale Anzahl von Dateneinträgen, dann kann das Navigieren in dem Datenträger-Inhaltsverzeichnis dadurch beschleunigt sein, da nicht für jedes Vorgeben der vorgebbaren aktuellen Position in dem Datenträger-Inhaltsverzeichnis das Lesen des mindestens einen weiteren Dateneintrags von dem Datenträger erforderlich ist. Beispielsweise sind Dateneinträge, die in dem Datenträger-Inhaltsverzeichnis unmittelbar vor oder nach Dateneinträgen angeordnet sind, die der mindestens einen ersten Liste zugeordnet sind, in der mindestens einen zweiten Liste gespeichert, um so einen raschen Zugriff auf diese Dateneinträge zu ermöglichen, wenn die vorgebbare aktuelle Position durch die Benutzeranforderung verändert wird.

Die Dateneintragsart bedeutet in diesem Zusammenhang, dass der entsprechende Dateneintrag z.B. ein Verzeichnis, eine Datei oder einen Verzeichnispfad repräsentiert. Der Vorteil ist, dass Verzeichnisse, Dateien oder Verzeichnispfade so in separaten zweiten Listen gespeichert werden können. Abhängig von der vorgebbaren aktuellen Position in dem Datenträger-Inhaltsverzeichnis kann die mindestens eine erste Liste einer der mindestens zwei zweiten Listen zugeordnet sein. Das Navigieren in dem Datenträger-Inhaltsverzeichnis kann so besonders übersichtlich und einfach sein.

In einer vorteilhaften Ausgestaltung der Vorrichtung ist die vorgebbare aktuelle Position vorgebbar durch Auswahl eines Dateneintrags, der ein Verzeichnis oder einen Verzeichnispfad repräsentiert. Die vorgebbare aktuelle Position ist ferner vorgebbar durch Vor- oder Zurückbewegen der vorgebbaren aktuellen Position in dem Datenträger-Inhaltsverzeichnis um mindestens einen Dateneintrag. Der Vorteil ist, dass das Navigieren in dem Datenträger-Inhaltsverzeichnis so sehr einfach möglich ist. Ferner kann einfach zu jeder möglichen Position in dem Datenträger-Inhaltsverzeichnis navigiert werden.

Ausführungsbeispiele der Erfindung sind im Folgenden anhand der schematischen Zeichnungen erläutert. Es zeigen:
Figur 1 eine Vorrichtung zum Anzeigen eines Datenträger-Inhaltsverzeichnisses eines Datenträgers,
Figur 2 ein Beispiel eines Datenträger-Inhaltsverzeichnisses, einer ersten und einer zweiten Liste,
Figur 3 ein erstes Ablaufdiagramm eines ersten Programms der Vorrichtung und
Figur 4 ein zweites Ablaufdiagramm eines zweiten Programms der Vorrichtung.

Elemente gleicher Konstruktion oder Funktion sind figuren-übergreifend mit den gleichen Bezugszeichen versehen.

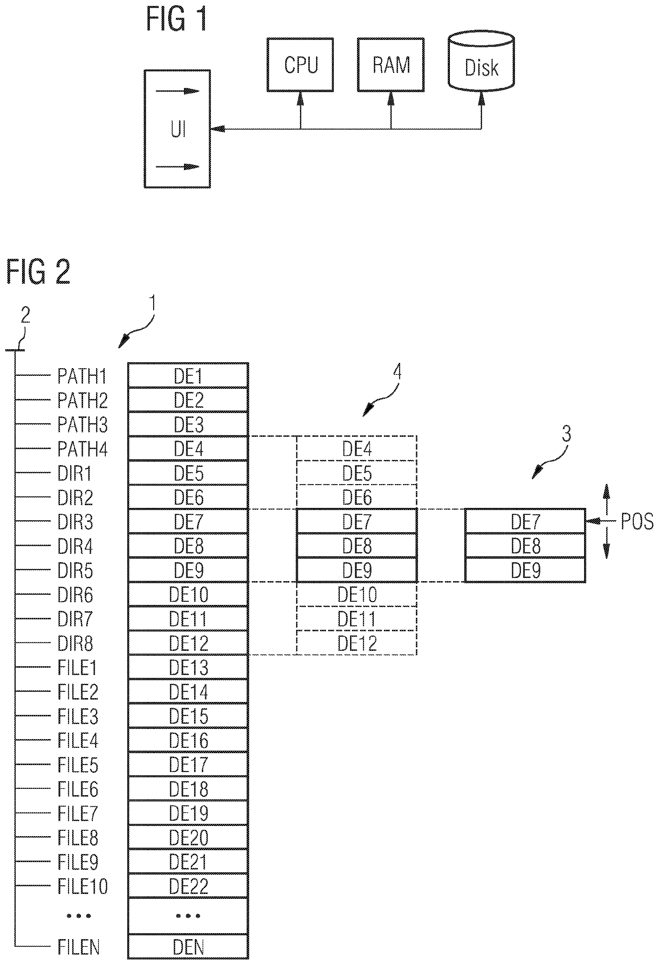

Figur 1 zeigt eine Vorrichtung, die eine Recheneinheit CPU, einen Speicher RAM und eine Benutzerschnittstelle UI umfasst. Die Benutzerschnittstelle UI weist beispielsweise Eingabeelemente zum Steuern der Vorrichtung auf. Die Benutzerschnittstelle UI umfasst ferner eine Anzeigeeinheit.

Die Vorrichtung umfasst einen Datenträger DISK oder ist mit dem Datenträger DISK koppelbar. Der Datenträger DISK ist beispielsweise ein Laufwerk für Compact Disks oder Digital Versatile Disks. Der Datenträger DISK kann jedoch ebenso eine Festplatte oder z.B. ein Flash-Speichermedium oder ein anderer Datenträger sein. Die Vorrichtung kann auch mehr als einen Datenträger DISK umfassen oder mit mehr als einem Datenträger DISK koppelbar sein. Eine Speicherkapazität des Datenträgers DISK, insbesondere wenn dieser die Digital Versatile Disk, die Festplatte oder das Flash-Speichermedium ist, kann mehrere Gigabytes bis mehrere hundert Gigabytes betragen. Auf solchen Datenträgern DISK ist eine große Anzahl von Dateien FILE speicherbar, z.B. Musikdateien oder Bilddateien, insbesondere in komprimierten Formaten, wie z.B. "MP3" oder "JPG". Entsprechend umfangreich kann ein Datenträger-Inhaltsverzeichnis 1 sein, das diese Dateien FILE in geordneter Form repräsentiert (Figur 2). Die Dateien FILE können ferner in Verzeichnissen DIR organisiert sein, wodurch sich eine baumartige Struktur des Datenträger-Inhaltsverzeichnisses 1 ergeben kann. Ein aktuelles Verzeichnis 2 ist beispielsweise ein Wurzelverzeichnis des Datenträger-Inhaltsverzeichnisses 1 oder ein Verzeichnis DIR innerhalb des Datenträger-Inhaltsverzeichnisses 1, das wiederum Dateien FILE, Verzeichnisse DIR oder Verzeichnispfade PATH umfassen kann. Der Verzeichnispfad PATH ist eine geordnete Liste von Verzeichnissen DIR, die jeweils eine Position einer Datei FILE in dem Datenträger-Inhaltsverzeichnis 1 eindeutig repräsentiert. In dem aktuellen Verzeichnis 2 sind gegebenenfalls einige tausend oder zehntausend Dateien FILE oder Verzeichnisse DIR gespeichert, es können jedoch auch weniger Dateien FILE oder Verzeichnisse DIR gespeichert sein.

Die Anzeigeeinheit der Benutzerschnittstelle UI ist ausgebildet, mindestens eine erste Liste 3 von Dateneinträgen DE des Datenträger-Inhaltsverzeichnisses 1 anzuzeigen. Ein Dateneintrag DE ist beispielsweise einer Datei FILE, einem Verzeichnis DIR oder einem Verzeichnispfad PATH zugeordnet und umfasst einen Dateinamen, einen Verzeichnisnamen bzw. den Verzeichnispfad PATH. Bevorzugt werden der Dateiname, der Verzeichnisname bzw. der Verzeichnispfad PATH mittels der Anzeigeeinheit angezeigt. Die mindestens eine erste Liste 3 fasst aufgrund einer begrenzten Größe der Anzeigeeinheit nur eine vorgegebene erste maximale Anzahl von Dateneinträgen DE, z.B. drei Dateneinträge DE. Es kann auch mehr als eine erste Liste 3 vorgesehen sein. Beispielsweise sind Verzeichnisse DIR, Verzeichnispfade PATH oder Dateien FILE in separaten ersten Listen 3 anzeigbar. Ebenso kann zusätzlich eine weitere erste Liste 3 vorgesehen sein, in der die verfügbaren Datenträger DISK anzeigbar sind. Die verfügbaren Datenträger, die Verzeichnispfade PATH, die Verzeichnisse DIR oder die Dateien FILE können jedoch auch von einer einzigen ersten Liste 3 umfasst sein.

Im Allgemeinen ist eine Anzahl von Dateneinträgen DE in dem Datenträger-Inhaltsverzeichnis 1 sehr viel größer als die vorgegebene erste maximale Anzahl von Dateneinträgen DE, die auf der Anzeigeeinheit angezeigt werden kann, so dass die mindestens eine erste Liste 3 von Dateneinträgen nur einen Ausschnitt aus dem Datenträger-Inhaltsverzeichnis 1 umfassen kann. Die Vorrichtung ist deshalb ausgebildet, ein Navigieren in dem Datenträger-Inhaltsverzeichnis 1 durch ein Verschieben dieses Ausschnitts zu ermöglichen. Dazu ist in dem Speicher RAM mindestens eine zweite Liste 4 gespeichert, die eine vorgegebene zweite maximale Anzahl von Dateneinträgen DE des Datenträger-Inhaltsverzeichnisses 1 fasst. Die vorgegebene zweite maximale Anzahl von Dateneinträgen DE ist mindestens so groß wie die vorgegebene erste maximale Anzahl von Dateneinträgen DE. Die mindestens eine erste Liste 3 von Dateneinträgen DE ist Teil der mindestens einen zweiten Liste 4 von Dateneinträgen DE, wobei vorzugsweise jeder ersten Liste 3 jeweils eine zweite Liste 4 zugeordnet ist.

Auf eine Benutzeranforderung hin ist eine vorgebbare aktuelle Position POS in dem Datenträger-Inhaltsverzeichnis 1 vorgebbar, z.B. über die Eingabeelemente der Benutzerschnittstelle UI. Abhängig von der vorgebbaren aktuellen Position POS werden Dateneinträge DE des Datenträger-Inhaltsverzeichnisses 1 von dem Datenträger DISK gelesen und in der mindestens einen zweiten Liste 4 gespeichert. Die mindestens eine erste Liste 3 wird gegebenenfalls entsprechend aktualisiert.

Die Benutzeranforderung ist beispielsweise ein Vor- oder Zurückbewegen der vorgebbaren aktuellen Position POS in dem Datenträger-Inhaltsverzeichnis 1. Die Benutzeranforderung kann jedoch auch ein Auswählen z.B. eines Verzeichnisses DIR sein. Das Auswählen des Verzeichnisses DIR bewirkt, dass das ausgewählte Verzeichnis DIR zu dem aktuellen Verzeichnis 2 wird. Ein Inhalt des aktuellen Verzeichnisses 2 wird dann z.B. bis maximal zu der vorgegebenen zweiten maximalen Anzahl von Dateneinträgen DE von dem Datenträger DISK gelesen und in der mindestens einen zweiten Liste 4 gespeichert. Die mindestens eine erste Liste 3 wird entsprechend aktualisiert, so dass der Inhalt des aktuellen Verzeichnisses 2 mittels der Anzeigeeinheit angezeigt wird.

In der mindestens einen zweiten Liste 4 von Dateneinträgen DE ist maximal die vorgegebene zweite maximale Anzahl von Dateneinträgen DE speicherbar. Ist bereits die vorgegebene zweite maximale Anzahl von Dateneinträgen DE in der mindestens einen zweiten Liste 4 gespeichert und soll aufgrund einer Benutzeranforderung mindestens ein weiterer Dateneintrag DE von dem Datenträger DISK gelesen und in der mindestens einen zweiten Liste 4 gespeichert werden, dann muss entsprechend mindestens ein Dateneintrag DE, der in der mindestens einen zweiten Liste 4 gespeichert ist, ersetzt werden durch den mindestens einen weiteren Dateneintrag DE. Vorzugsweise werden dann diejenigen Dateneinträge zuerst ersetzt, die den größten Abstand von der vorgebbaren aktuellen Position POS in dem Datenträger-Inhaltsverzeichnis 1 aufweisen. Dadurch ist sichergestellt, dass beispielsweise das Vor- bzw. Zurückbewegen der vorgebbaren aktuellen Position POS rasch erfolgen kann und nicht durch ansonsten erforderliche Zugriffe auf den Datenträger DISK verzögert wird. Es kann jedoch auch erforderlich sein, Dateneinträge DE in der mindestens einen zweiten Liste 4 zu ersetzen, wenn ein Verzeichnis DIR ausgewählt und dadurch zum aktuellen Verzeichnis 2 wurde. Der Inhalt des aktuellen Verzeichnisses 2 ersetzt dann gegebenenfalls die Dateneinträge DE der mindestens einen zweiten Liste 4, die dem zuvor gültigen aktuellen Verzeichnis 2 zugeordnet sind.

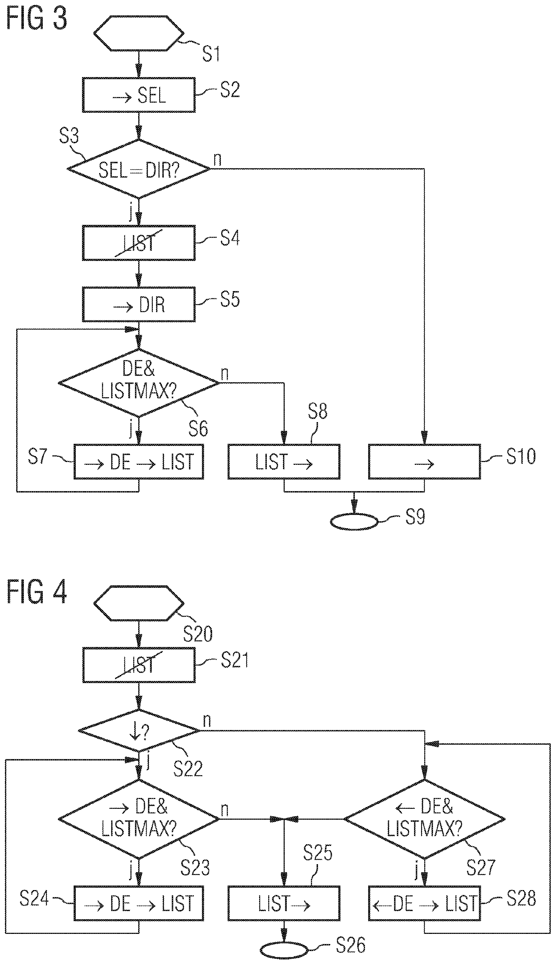

Figur 3 zeigt ein erstes Ablaufdiagramm eines Programms zum Wechseln des aktuellen Verzeichnisses 2, das beispielsweise durch die Recheneinheit CPU ausgeführt wird. Das Programm beginnt in einem Schritt S1. Der Schritt S1 wird vorzugsweise ausgeführt infolge einer Auswahl SEL eines Dateneintrags DE durch den Benutzer.

In einem Schritt S2 wird die Auswahl SEL des Benutzers erfasst. In einem Schritt S3 wird überprüft, ob die Auswahl SEL ein Dateneintrag DE ist, der ein Verzeichnis DIR repräsentiert. Ist diese Bedingung erfüllt, wird in einem Schritt S4 die mindestens eine zweite Liste 4 von Dateneinträgen DE gelöscht. Das Löschen der mindestens einen zweiten Liste 4 von Dateneinträgen DE kann jedoch beispielsweise auch dadurch ausgeführt werden, dass gegebenenfalls vorhandene Dateneinträge DE in der mindestens einen zweiten Liste 4 ungültig erklärt werden.

In einem Schritt S5 wird das ausgewählte Verzeichnis DIR zum aktuellen Verzeichnis 2. In einem Schritt S6 wird überprüft, ob mindestens ein weiterer Dateneintrag DE in dem aktuellen Verzeichnis 2 des Datenträger-Inhaltsverzeichnisses 1 zu lesen ist. Ferner wird überprüft, ob in der mindestens einen zweiten Liste 4 noch mindestens ein weiterer Dateneintrag DE gespeichert werden kann. Ist mindestens ein weiterer Dateneintrag DE lesbar und in der mindestens einen zweiten Liste 4 speicherbar, dann wird in einem Schritt S7 der weitere Dateneintrag DE des Datenträger-Inhaltsverzeichnisses 1 von dem Datenträger DISK gelesen und in der mindestens einen zweiten Liste 4 gespeichert. Das Programm wird dann in dem Schritt S6 fortgeführt.

Der Schritt S7 wird somit wiederholt, bis keine weiteren Dateneinträge DE in dem aktuellen Verzeichnis 2 zu lesen sind oder bis die vorgegebene zweite maximale Anzahl von Dateneinträgen DE in der mindestens einen zweiten Liste 4 gespeichert sind. Das Programm wird dann in dem Schritt S8 fortgeführt. In dem Schritt S8 wird die mindestens eine erste Liste 3 aktualisiert und mittels der Anzeigeeinheit angezeigt. Das Programm endet in einem Schritt S9.

Ist die Auswahl SEL in dem Schritt S3 ein Dateneintrag DE, der eine Datei FILE repräsentiert, dann wird das Programm in einem Schritt S10 fortgeführt. In dem Schritt S10 kann beispielsweise ein Dateiinhalt der Datei FILE wiedergegeben werden.

In Figur 4 ist ein zweites Ablaufdiagramm eines zweiten Programms dargestellt, das ebenfalls vorzugsweise mittels der Recheneinheit CPU ausgeführt wird. Das Programm beginnt in einem Schritt S20. Der Schritt S20 wird beispielsweise ausgeführt, wenn der Benutzer die vorgebbare aktuelle Position POS in dem Datenträger-Inhaltsverzeichnis 1 vor- oder zurückbewegt. Das Vor- oder Zurückbewegen der vorgebbaren aktuellen Position POS erfolgt beispielsweise um jeweils einen Dateneintrag DE, kann jedoch ebenso um jeweils mehr als einen Dateneintrag DE erfolgen, z.B. um die vorgegebene erste maximale Anzahl von Dateneinträgen DE.

Erfolgt das Vor- oder Zurückbewegen der vorgebbaren aktuellen Position POS beispielsweise um die vorgegebene erste maximale Anzahl von Dateneinträgen DE, dann wird in einem Schritt S21 die mindestens eine zweite Liste 4 gelöscht bzw. ungültig erklärt. In einem Schritt S22 wird dann überprüft, ob die vorgebbare aktuelle Position POS in dem Datenträger-Inhaltsverzeichnis 1 vor- oder zurückbewegt wurde. Wurde die vorgebbare aktuelle Position POS vorbewegt, dann wird in einem Schritt S23 überprüft, ob in dem Datenträger-Inhaltsverzeichnis 1 mindestens ein weiterer Dateneintrag DE in dem aktuellen Verzeichnis 2 existiert, der auf den letzten Dateneintrag DE der in der mindestens einen zweiten Liste 4 gespeicherten Dateneinträge DE folgt. Ferner wird überprüft, ob in der mindestens einen zweiten Liste 4 noch mindestens ein weiterer Dateneintrag DE gespeichert werden kann. Sind diese Bedingungen erfüllt, dann wird in einem Schritt S24 der mindestens eine weitere Dateneintrag DE von dem Datenträger DISK gelesen und in der mindestens einen zweiten Liste 4 gespeichert. Das Programm wird dann in dem Schritt S23 fortgesetzt. Der Schritt S24 wird somit wiederholt, bis kein weiterer Dateneintrag DE in dem aktuellen Verzeichnis 2 lesbar ist oder bis die vorgegebene zweite maximale Anzahl von Dateneinträgen DE in der mindestens einen zweiten Liste 4 gespeichert ist. Das Programm wird dann in einem Schritt S25 fortgeführt. In dem Schritt S25 wird dann die erste Liste 3 von Dateneinträgen DE aktualisiert und mittels der Anzeigeeinheit angezeigt. Das Programm endet in einem Schritt S26.

Wird in dem Schritt S22 festgestellt, dass der Benutzer die vorgebbare aktuelle Position POS zurückbewegt hat, dann wird in einem Schritt S27 überprüft, ob in dem Datenträger-Inhaltsverzeichnis 1 mindestens ein weiterer Dateneintrag DE in dem aktuellen Verzeichnis 2 existiert, der vor dem ersten Dateneintrag DE in der mindestens einen zweiten Liste 4 angeordnet ist. Ferner wird überprüft, ob in der mindestens einen zweiten Liste 4 noch mindestens ein weiterer Dateneintrag DE gespeichert werden kann. Sind diese Bedingungen erfüllt, dann wird in einem Schritt S28 der mindestens eine weitere Dateneintrag DE von dem Datenträger DISK gelesen und in der mindestens einen zweiten Liste 4 gespeichert. Das Programm wird dann in dem Schritt S27 fortgesetzt. Der Schritt S28 wird somit wiederholt, bis kein weiterer Dateneintrag DE in dem aktuellen Verzeichnis 2 lesbar ist oder bis die vorgegebene zweite maximale Anzahl von Dateneinträgen DE in der mindestens einen zweiten Liste 4 gespeichert ist. Das Programm wird dann in dem Schritt S25 fortgeführt und in dem Schritt S26 beendet.

Die Vorrichtung ermöglicht das Navigieren in dem Datenträger-Inhaltsverzeichnis 1 bei einem vorgegebenen konstanten oder nach oben begrenzten Speicherbedarf unabhängig von der Verzeichnisstruktur, der Anzahl von Dateien FILE, Verzeichnissen DIR oder Verzeichnispfaden PATH oder gegebenenfalls weiteren Dateneinträgen DE des Datenträger-Inhaltsverzeichnisses 1 und unabhängig von einer Länge von Dateinamen oder Verzeichnisnamen, da nur die aktuell mittels der Anzeigeeinheit angezeigte mindestens eine erste Liste 3 in dem Speicher RAM in Form der mindestens einen zweiten Liste 4 gespeichert sein muss. In der mindestens einen zweiten Liste 4 können jedoch weitere, insbesondere an die mindestens eine erste Liste 3 angrenzende Dateneinträge DE, zusätzliche gespeichert werden, wenn die vorgegebene zweite maximale Anzahl von Dateneinträgen DE größer ist als die vorgegebene zweite maximale Anzahl von Dateneinträgen DE, um das Navigieren so beschleunigen zu können.

Die Vorrichtung kann auch ausgebildet sein, entsprechend dem Navigieren in dem Datenträger-Inhaltsverzeichnis 1 Dateinamen oder Verzeichnisnamen mittels der Anzeigeeinheit anzuzeigen, die zu lang sind, um vollständig dargestellt werden zu können. Bevorzugt werden nur so viele Zeichen des jeweiligen Dateinamens bzw. Verzeichnisnamens von dem Datenträger DISK mit dem zugehörigen Dateneintrag DE gelesen, wie über die mindestens eine erste Liste 3 mittels der Anzeigeeinheit gleichzeitig dargestellt werden können. Auf Benutzeranforderung können dann gegebenenfalls weitere Zeichen des jeweiligen Dateinamens oder Verzeichnisnamens von dem Datenträger DISK gelesen und angezeigt werden. Ebenso wie Dateneinträge DE in der mindestens einen zweiten Liste 4 ersetzen die weiteren Zeichen gegebenenfalls die zuvor mit dem jeweiligen Dateneintrag DE gespeicherten Zeichen des Dateinamens bzw. des Verzeichnisnamens, wenn diese aktuell nicht angezeigt werden. Dadurch ist der Speicherbedarf für Dateinamen oder Verzeichnisnamen konstant oder nach oben begrenzt. Die Dateinamen oder Verzeichnisnamen sind jedoch durch das Lesen weiterer Zeichen von dem Datenträger DISK nach der Benutzeranforderung vollständig verfügbar unabhängig von der Länge der Dateinamen oder Verzeichnisnamen. Es können auch mehr Zeichen des Dateinamens bzw. des Verzeichnisnamens für jeden Dateneintrag DE speicherbar sein, als gleichzeitig für jeden Dateneintrag DE mittels der Anzeigeeinheit angezeigt werden können. Dadurch kann das Anzeigen von langen Dateinamen bzw. Verzeichnisnamen beschleunigt sein, da weniger Zugriffe auf den Datenträger DISK zum Lesen der weiteren Zeichen erforderlich sind.

## Patentansprüche

1. Vorrichtung zum Anzeigen eines Datenträger-Inhaltsverzeichnisses (1) eines Datenträgers (DISK), die umfasst
- eine Anzeigeeinheit, die ausgebildet ist, bezogen auf eine vorgebbare aktuelle Position (POS) in dem Datenträger-Inhaltsverzeichnis (1) eine vorgegebene erste maximale Anzahl von aufeinander folgenden Dateneinträgen (DE) des Datenträger-Inhaltsverzeichnisses (1) in Form mindestens einer ersten Liste (3) anzuzeigen,
- einen Speicher (RAM), der ausgebildet ist, mindestens zwei zweite Listen (4) mit einer vorgegebenen zweiten maximalen Anzahl von Dateneinträgen (DE) zu speichern, wobei die vorgegebene zweite maximale Anzahl von Dateneinträgen (DE) mindestens so groß ist, wie die vorgegebene erste maximale Anzahl von Dateneinträgen (DE), und die mindestens eine erste Liste (3) Teil einer der mindestens zwei zweiten Listen (3) ist,
und die ausgebildet ist,
- abhängig von einer Benutzeranforderung die vorgebbare aktuelle Position (POS) in dem Datenträger-Inhaltsverzeichnis (1) vorzugeben,
- abhängig von der vorgebbaren aktuellen Position (POS) mindestens einen weiteren Dateneintrag (DE) des Datenträger-Inhaltsverzeichnisses (1) von dem Datenträger (DISK) zu lesen und in einer der mindestens zwei zweiten Listen (4) zu speichern, wenn dieser weitere Dateneintrag (DE) aktuell nicht in den mindestens zwei zweiten Listen (4) gespeichert ist,
- abhängig von der vorgebbaren aktuellen Position (POS) mindestens einen Dateneintrag (DE), der in den mindestens zwei zweiten Listen (4) gespeichert ist, zu ersetzen durch den mindestens einen weiteren Dateneintrag (DE), wenn in den mindestens zwei zweiten Listen (4) bereits die vorgegebene zweite maximale Anzahl von Dateneinträgen (DE) gespeichert ist, und
- den mindestens einen weiteren Dateneintrag einer der mindestens zwei zweiten Listen zuzuordnen abhängig von einer Dateneintragsart und die mindestens eine erste Liste entsprechend zu aktualisieren und anzuzeigen.

2. Vorrichtung nach Anspruch 1, bei der die vorgebbare aktuelle Position (POS) vorgebbar ist durch Auswahl eines Dateneintrags (DE), der ein Verzeichnis (DIR) oder einen Verzeichnispfad (PATH) repräsentiert, oder durch Vor- oder Zurückbewegen der vorgebbaren aktuellen Position (POS) in dem Datenträger-Inhaltsverzeichnis (1) um mindestens einen Dateneintrag (DE).

## Claims

1. Apparatus for displaying a data storage medium content directory (1) for a data storage medium (DISK), which comprises
- a display unit which is designed to take a prescribable current position (POS) in the data storage medium content directory (1) as a basis for displaying a prescribed first maximum number of successive data entries (DE) in the data storage medium content directory (1) in the form of at least one first list (3),
- a memory (RAM) which is designed to store at least two second lists (4) having a prescribed second maximum number of data entries (DE), the prescribed second maximum number of data entries (DE) being at least as great as the prescribed first maximum number of data entries (DE), and the at least one first list (3) being part of one of the at least two second lists (3),
and which is designed
- to take a user request as a basis for prescribing the prescribable current position (POS) in the data storage medium content directory (1),
- to take the prescribable current position (POS) as a basis for reading at least one further data entry (DE) in the data storage medium content directory (1) from the data storage medium (DISK) and to store it in one of the at least two second lists (4) if this further data entry (DE) is currently not stored in the at least two second lists (4),
- to take the prescribable current position (POS) as a basis for replacing at least one data entry (DE) stored in the at least two second lists (4) with the at least one further entry (DE) if the at least two second lists (4) already store the prescribed second maximum number of data entries (DE),
- to associate the at least one further data entry with one of the at least two lists on the basis of a data entry type and to update and display the at least one first list as appropriate.

2. Apparatus according to Claim 1, in which the prescribable current position (POS) can be prescribed by selecting a data entry (DE) which represents a directory (DIR) or a directory path (PATH), or by moving the prescribable current position (POS) in the data storage medium content directory (1) forward or backward by at least one data entry (DE).

## Revendications

1. Dispositif d'affichage d'un répertoire de support de données (1) d'un support de données (DISK), comprenant
- une unité d'affichage qui est configurée pour, en référence à une position actuelle (POS) pouvant être prédéfinie dans le répertoire de support de données (1), afficher un premier nombre maximal prédéfini d'enregistrements de données (DE) successifs du répertoire de support de données (1) sous la forme d'au moins une première liste (3),
- une mémoire (RAM) qui est configurée pour mémoriser au moins deux deuxièmes listes (4) avec un deuxième nombre maximal prédéfini d'enregistrements de données (DE), le deuxième nombre maximal prédéfini d'enregistrements de données (DE) étant au moins aussi grand que le premier nombre maximal prédéfini d'enregistrements de données (DE), et l'au moins une première liste (3) faisant partie d'une des au moins deux deuxièmes listes (3),
et qui est configuré pour
- en fonction d'une demande d'utilisateur, prédéfinir la position actuelle (POS) pouvant être prédéfinie dans le répertoire de support de données (1),
- en fonction de la position actuelle (POS) pouvant être prédéfinie, lire au moins un enregistrement de données (DE) supplémentaire du répertoire de support de données (1) depuis le support de données (DISK) et le mémoriser dans l'une des au moins deux deuxièmes listes (4) lorsque cet enregistrement de données (DE) supplémentaire n'est actuellement pas mémorisé dans les au moins deux deuxièmes listes (4),
- en fonction de la position actuelle (POS) pouvant être prédéfinie, remplacer au moins un enregistrement de données (DE) qui est mémorisé dans les au moins deux deuxièmes listes (4) par l'au moins un enregistrement de données (DE) supplémentaire lorsque le deuxième nombre maximal prédéfini d'enregistrements de données (DE) est déjà mémorisé dans les au moins deux deuxièmes listes (4), et
- associer l'au moins un enregistrement de données supplémentaire à l'une des au moins deux deuxièmes listes en fonction d'un mode d'entrée de données puis actualiser en conséquence et afficher l'au moins une première liste.

2. Dispositif selon la revendication 1, avec lequel la position actuelle (POS) pouvant être prédéfinie peut être prédéfinie en sélectionnant un enregistrement de données (DE) qui représente un répertoire (DIR) ou un chemin de répertoire (PATH), ou en déplaçant vers l'avant ou vers l'arrière la position actuelle (POS) pouvant être prédéfinie dans le répertoire de support de données (1) d'au moins un enregistrement de données (DE).
